# EUROPEAN PATENT SPECIFICATION

(11) **EP 0 548 909 B1**
(45) Date of publication and mention of the grant of the patent: **19.06.1996**
(21) Application number: 92121792.3
(22) Date of filing: 22.12.1992
(51) Int. Cl.: G06F 11/34, G06F 11/32

(54) **Performance evaluation method and device thereof for a parallel computer**
Leistungsprüfverfahren und entsprechende Einrichtung für einen Parallelrechner
Procédé d'analyse de performances et sa réalisation pour un ordinateur parallèle

(30) Priority: 26.12.1991 JP 345042/91
(43) Date of publication of application: 30.06.1993
(73) Proprietor: FUJITSU LIMITED, Kawasaki-shi, Kanagawa 211 (JP)
(72) Inventor: Horie, Takeshi, c/o FUJITSU LIMITED, Kawasaki-shi, Kanagawa 211 (JP)
(74) Representative: Stebbing, Timothy Charles

(56) References cited:
- EP-A- 0 422 945
- IEEE TRANSACTIONS ON SOFTWARE ENGINEERING vol. 15, no. 12, December 1989, New York, US, pp. 1615-1629; C.-Q. YANG et al.: 'Performance measurement for parallel and distributed programs: a structured and automatic approach'
- ELECTRONIC DESIGN vol. 37, no. 24, 23 November 1989, Cleveland, Ohio, US, pp. 77-90; M. SCHINDLER: 'Parallel systems demand complex visual debuggers'
- IEEE TRANSACTIONS ON COMPUTERS vol. 37, no. 2, February 1988, New York, US, pp. 243-248; B.P. MILLER: 'DPM: A measurement system for distributed programs'

## Description

This invention relates to a performance evaluation method and device for a parallel computer which carries out parallel processing using a plurality of processors by transmitting and receiving messages among the processors.

Parallel computers have been proposed in which a large number of simple structured processors are connected with each other, and parallel processing is carried out by means of message communication between the processors. In such a computer, an operational rate for all the processors is particularly important.

A known performance evaluating method for a parallel computer is as follows: a communication time interval, a barrier synchronous time interval and an executing time interval among the processors are measured while executing parallel processing and the ratio of the communication time interval to the barrier synchronous time interval is obtained, whereby the performance of the parallel computer can be analyzed. However, this is insufficient for finding the causes of performance deterioration of the parallel computer.

For instance, when a message is transmitted from a processor A to a processor B and a processor C and when processor C is ready for receiving a message, the entire processing time can be reduced by first transmitting the message to processor C rather than processor B. However, the conventional method only obtains the ratio of the communication time interval to the synchronous time interval. Accordingly, it is impossible to determine that the message transmission from processor A to processor C is a cause of performance deterioration.

Thus, in the above-mentioned method, it is possible to find an overhead due to communication but is impossible to analyze the exact cause of deteriorated performance. In addition, in the prior art the whole of the message flow is displayed rather than just the message flow affecting the deterioration of performance.

IEEE Transactions on Software Engineering, Vol. 15, No. 12, Dec. '89, New York, US, pages 1615 to 1629, discloses a performance evaluation method for parallel and distributed programs. To determine the completion time of a parallel program, the event path in the execution history of the program having the longest duration is found. This event path is called the critical path, and shows the parts of the program having the greatest effect on performance.

An embodiment of the present invention may provide a process performance evaluation method and a device thereof for a parallel computer which can obtain a maximum delay path for indicating a cause of performance deterioration and can display the maximum delay path.

The method of the present invention includes a memorizing step and a maximum delay path obtaining step. After parallel processing, the maximum delay path is detected by tracing a message transmitting route from a last ending processor in which execution was last completed to a starting processor from where the message arose. The memorizing step memorizes at least information showing the message transmitting route. The maximum delay path obtaining step includes searching for the last ending processor and tracing the route.

In the memorizing step, various pieces of information are memorized in each processor during parallel processing from the beginning to the end. In the maximum delay path obtaining step, the maximum delay path is obtained by using each piece of memorized information after the execution of parallel processing has been completed.

The memorizing step includes first to fifth memorizing steps (1) to (5), as follows:-
(1) A step for memorizing an execution starting time for parallel processing;
(2) Memorizing a standby starting time for waiting for reception of a message. After the standby starting time, a processor can receive a message from another processor at any time;
(3) Memorizing a message number on reception of a message by a processor, the processor number of the processor which transmits the message, and the time of receipt;
(4) Memorizing the message number on transmitting the message and the time when the message is transmitted from the processor;
(5) Memorizing the execution ending time of each processor.

The maximum delay path obtaining step includes first to fourth path obtaining steps (a) to (d):-
(a) A step of searching for the last ending processor, in accordance with each ending time obtained in memorizing step (5);
(b) Searching for the standby starting time obtained in memorizing step (2) for the last ending processor;
(c) Searching for the message number, transmitting processor number and message receiving time obtained in memorizing step (3) for the last ending processor;
(d) Searching for the message transmitting processor corresponding to the transmitting processor number.

To obtain the maximum delay path, steps (a) to (d) are repeated for each processor from the last ending processor to the starting processor.

According to the above method, as claimed in claim 1, in each processor the memorizing step memorizes the execution starting time, the standby starting time, the message reception time and the message number on reception of the message, the transmitting processor number, message transmitting time and message number on transmitting the message, and execution ending time. In each processor the maximum delay path step subsequently searches for the last ending processor, the standby starting time thereof, the message number thereof, the transmitting processor number and the corresponding message transmitting processor. These searches are repeated from the last ending processor successively back to the starting processor. Thus, the maximum delay path can be obtained and therefore the performance of the parallel computer can be evaluated.

Another aspect of the invention is a performance evaluation device as claimed in claim 9 comprising measuring means, memorizing means, comparing means, searching means and maximum delay path obtaining means.

The measuring means measures the above execution starting time, standby starting time, receiving time, transmitting time, and execution ending time for each processor.

The memorizing means memorizes the message number on reception of a message, transmitting processor number, message number on transmitting the message and each time measured by the measuring means.

The comparing means compares each execution ending time of the processors as memorized by the memorizing means.

The searching means searches for the last ending processor (i.e. the processor whose execution ended last), in accordance with the output of the comparing means. The searching means also searches for the standby starting time for that processor, the message number of the message in the processor, the transmitting processor number and the message transmitting processor corresponding to the transmitting processor number.

The maximum delay path obtaining means obtains the maximum delay path showing the longest route of message transmission by repeating operation of the searching means in relation to each processor, beginning with the last ending processor and finishing with the starting processor.

The help obtain the maximum delay path, the device may have barrier synchronous issuing means. This interrupts processing until all the processors issue a barrier synchronous signal with a synchronous number on execution of the parallel processing.

Each processor may have a synchronous circuit for issuing the barrier synchronous signal with a barrier synchronous number. Then the barrier synchronous issuing means interrupts processing of the processor until it detects the barrier synchronous signals from all the processors.

The memorizing means may memorize a barrier synchronous number of the barrier synchronous signal issued by each synchronous circuit and the issuing time thereof, until the barrier synchronous issuing means detects all the barrier synchronous issuing signals.

The comparing means may compare the barrier synchronous numbers and the times thereof with each other.

The searching means may regard the processor which last issued the barrier synchronous number as the processor having the maximum delay path, in accordance with the barrier synchronous number and the time thereof.

In addition, it is possible to obtain the waiting time interval for the message from the standby starting time for reception of the message and the message reception time, and also to obtain the waiting time interval due to the barrier synchronism. Accordingly, it is possible to see which path has a long waiting time interval, indicating a need to increase the message transmission speed of that path in order to increase the speed of parallel processing.

The comparing means and/or the searching means may be installed in each processor in order to execute in parallel the comparison of the execution ending time and the search for the last ending processor.

Furthermore, a display means may be provided to display the maximum delay path, so it can be recognized visually. When the message waiting state, for example the standby starting time for reception of the message, and the number of each processor in operation, are also displayed with the maximum delay path, it is possible to improve the performance evaluation for the parallel computer.

Reference is made, by way of example, to the accompanying drawings, in which:-
Fig. 1 shows a principle flow chart of a performance evaluation method embodying the present invention;
Fig. 2 shows a detail flow chart of Fig. 1;
Fig. 3 shows a principle block diagram of a performance evaluation device for realizing the performance evaluation method of the present invention;
Fig. 4 shows a flow chart of a memorizing step;
Fig. 5 shows a flow chart of a maximum delay path obtaining step;
Fig. 6 shows a structural block diagram of a first embodiment of the performance evaluation device;
Fig. 7 shows a structural block diagram of a second embodiment of the performance evaluation device;
Fig. 8 shows a principle flow chart of a performance evaluation method having a step for displaying the maximum delay path;
Fig 9 shows a first example of a method for displaying the maximum delay path;
Fig. 10 shows a structural block diagram of a third embodiment of the performance evaluation device, for implementing the method of Fig. 8;
Fig. 11 shows a fourth embodiment of the performance evaluation device;
Fig. 12 shows a second example of a method for displaying the maximum delay path;
Fig. 13 shows another flow chart of a performance evaluation method;
Fig. 14 shows a fifth embodiment of the performance evaluation device; and
Fig. 15 shows a sixth embodiment of the device.

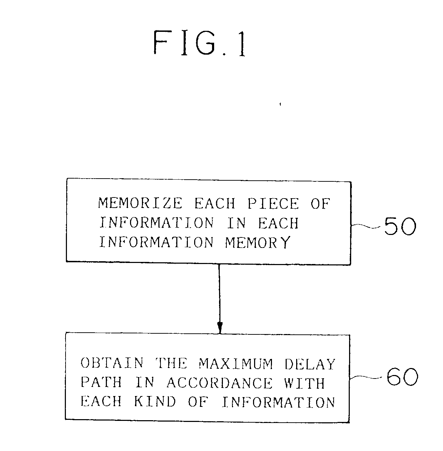

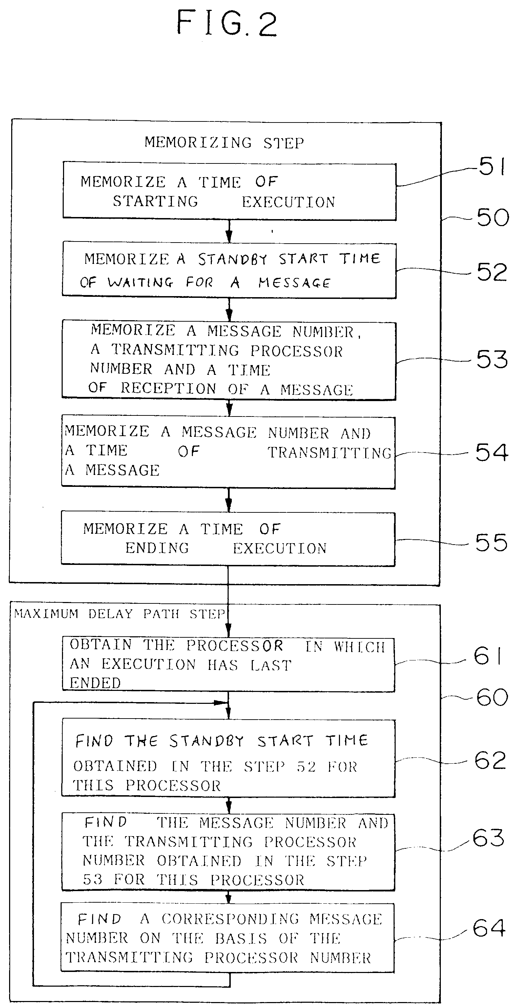

Preferred embodiments of the present invention shown in principle in Figs. 1 to 3, will be described below.

### [Embodiment 1]

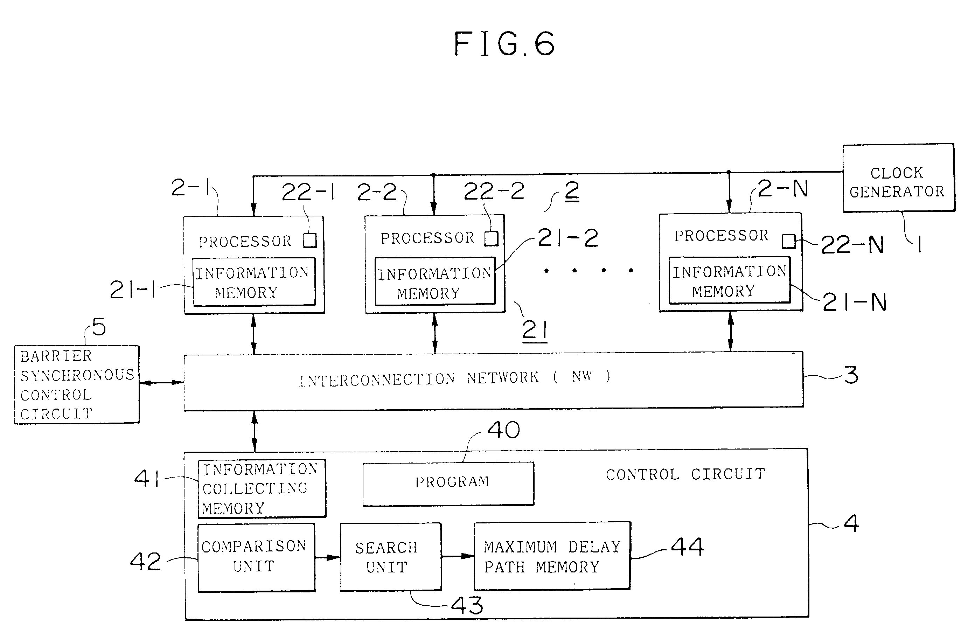

In Fig. 6, a first embodiment of the performance evaluation device for the parallel computer is implemented as described below.

Several processors 2 (2-1 to 2-N) are installed in the parallel computer, and perform parallel processing by exchanging messages.

Each processor 2 (2-1 to 2-N) is connected to a clock generator 1, which generates a clock pulse signal. The pulse number thereof is counted to measure the execution starting time, stand-by starting time for waiting for reception of a message, message reception time, message transmission time, and execution ending time for every one of the processors 2-1 to 2-N.

Each processor 2-1 to 2-N is mutually connected via an interconnection network (a network NW) 3 to allow mutual message communication. A control circuit 4 is connected to the interconnection network 3 to tell the network which processors message communication should be made between. Each processor has an information memory 21 (21-1 to 21-N) and a synchronous circuit 22 (22-1 to 22-N) for making and issuing a barrier synchronous signal with a number in order.

In addition, the interconnection network 3 is connected to a barrier synchronous control circuit 5 which acts to interrupt the processing carried out by the processors 2-1 to 2-N until all their synchronous circuits 22-1 to 22-N issue the barrier synchronous signal with the synchronous number.

The information memory 21 of each processor stores the following information.
Information (1): When a message is transmitted from a transmitting processor to the other processor(s), a message number with a number in order and the time at transmission is memorized for every one message from the transmitting processor. A transmitting processor number which indicates the transmitting processor is added to the message.
Information (2): When a processor receives a message from the transmitting processor, the message number, the transmitting processor number and the time on reception of these numbers are memorized.
Information (3): When a processor waits for reception of a message from the transmitting processor, the starting time for waiting is memorized. This is called the "standby starting time". After the standby starting time, the processor can receive a message from another processor at any time.
Information (4): When the execution of the parallel processing is started, the time thereat is memorized.
Information (5): When the execution of the parallel processing is ended, the time thereat is memorized.
Information (6): When the barrier synchronous signal is issued from the barrier synchronous circuit 22 (22-1∼ 22-N), the barrier synchronous number in the order at every time when the barrier synchronous signal is issued and the time at the barrier synchronous signal is issued are memorized. The barrier synchronous control circuit 5 makes the execution of the processor wait until all of the processors issue the barrier synchronous signal.

The control circuit 4 controls the above mentioned interconnection network 3. The control circuit 4 includes a program 40, an information collecting memory 41, a comparison unit 42, a search unit 43 and a maximum delay path memory 44 to obtain a maximum delay path.

The information collecting memory 41 memorizes the information indicating the message number, the transmitting processor number, the time or the like collected from the information memories 21-1∼ 21-N in each processor 2-1∼ 2-N through the interconnection network 3.

The information collecting memory 41 memorizes the barrier synchronous number and the time at which the barrier synchronous signal is issued.

The control circuit 4 is also implemented to obtain, after ending the execution of the parallel processing, the maximum delay path for indicating in which processor 2 the maximum delay is caused in accordance with each piece of information memorized in the information collecting memory 41.

The comparison unit 42 compares the execution ending time or other time information with each other as well as comparing the issue time for each barrier synchronous number, which is memorized in the information collecting memory 41, to supply a comparison output to a search unit 43.

The search unit 43 searches for the processor 2 whose execution has lastly been ended, the standby starting time for reception of the message in this processor, the message number of this processor, the transmitting processor number, and the message transmitting processor corresponding to the transmitting processor number in response to the output of the comparison circuit 42. In addition, the search unit 43 may search for the processor 2 which has lastly issued the barrier synchronous signal in response to the comparison result for issue time for each synchronous number. The processor 2 which has lastly issued the barrier synchronous signal is regarded as the processor in which the execution has lastly been ended.

A maximum delay path memory 44 stores in time sequence each piece of information searched by the search unit 43, namely, the maximum delay path.

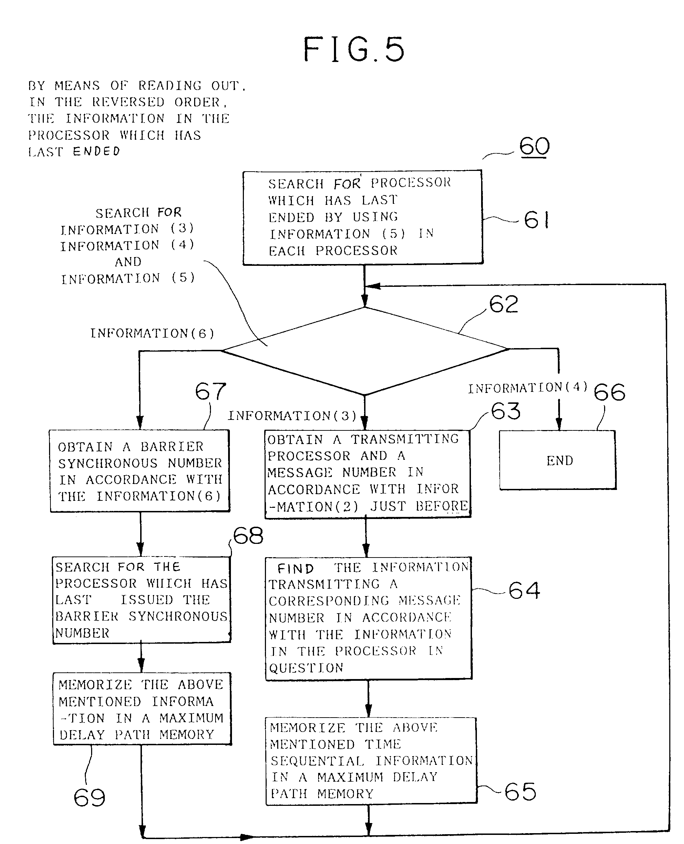

A program 40 is an instruction for carrying out a flow of the maximum delay path obtaining step illustrated in Fig. 5. The instruction is supplied to the information collecting memory 41, the comparison unit 42, the search unit 43 and the maximum delay path memory 44.

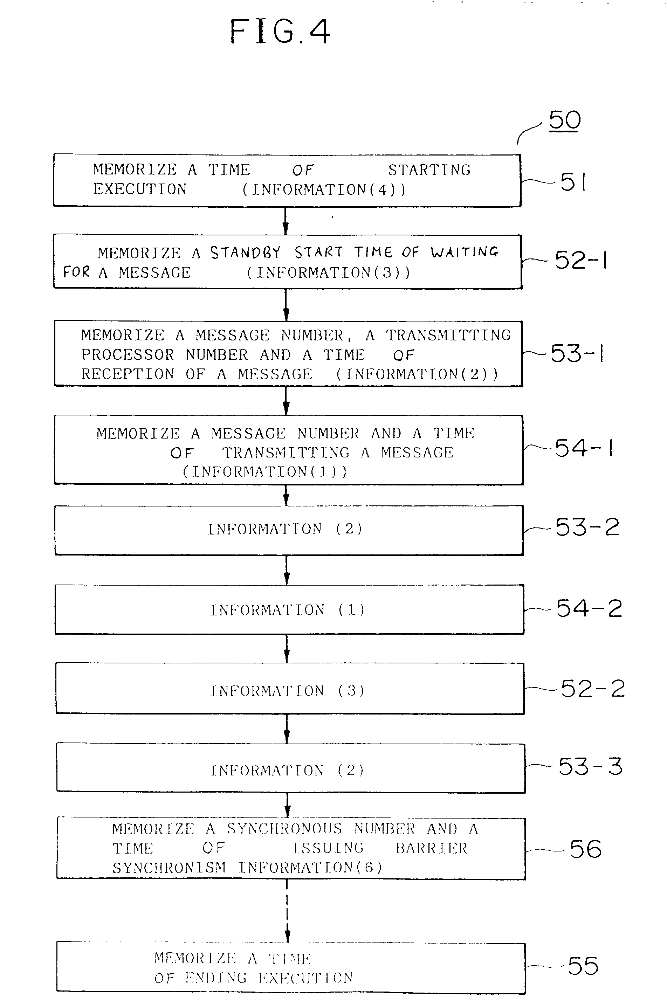

Next, the first embodiment of the performance evaluating method for a parallel computer according to the present invention will be described with reference to Figs. 4 and 5.

In each information memory 21-1∼ 21-N of the processor 2-1∼ 2-N, in parallel processing, the execution starting time measured by the clock generator 1 is memorized (memorization of the information (4), at step 51). The stand by starting time reception of the message is then memorized (memorization of the information (3), at step 52-1), then the message number on reception of the message, the transmitting processor number and the reception time thereof are memorized (memorization of the information (2), at step 53-1).

Then, the message number on transmitting the message is memorized (memorization of the information (1), at step 54-1). Further, step 53-2, step 54-2, step 52-2 and step 53-3 memorize the information (2), the information (1), the information (3) and the information (2), respectively.

In addition, when the barrier synchronous signals are issued at different times from the synchronous circuits 22-1∼ 22-N in each processor 2-1∼ 2-N, each information memory 21-1∼ 21-N memorize the synchronous number and the time thereat on issuing the barrier synchronous signal (step 56). Further, when a barrier synchronous control circuit 5 confirms that the barrier synchronous signal has been issued from all of the synchronous circuits 21-1∼ 21-N, the processing carried out by the processor is restarted.

Finally, the time the execution is ended is stored in the information memory (step 55).

In a manner described above, each information memory 21-1∼ 21-N memorizes the informations as information (4), information (3), information (2), information (1),information (2), information (1), information (3), information (2), information (6)... information (5) on ending the execution of the parallel processing. Information (3) is always followed by information (2) because the message is bound to be received after being ready for reception of the message.

Next, the maximum delay path obtaining step 60 will be described.

After ending the execution of the parallel processing, each piece of information memorized in each information memory 21-1∼ 21-N is collected in the information collecting memory 41 through the interconnection network 3.

In accordance with each information supplied from the information collecting memory 41, the maximum delay path is obtained along the flow chart illustrated in Fig. 5. As a method for this, data are subsequently read out from the tail, namely, in the reversed order from the information (5) to analyze it.

More particularly, the comparison unit 42 compares the execution ending time as the information (5) of each processor 2-1∼ 2-N with each other. The search unit 43 obtains the processor in which the execution of the parallel processing has lastly been ended (step 61). As an example, it is assumed that the processor at that time is A.

Next, the information stored in the memory of the last ended processor (for example, the processor A) is read out in the reversed order to search, by the search unit 62, the information such as the standby starting time for waiting reception of the message information (3) or the barrier synchronous signal information (6) (step 62).

When the standby starting time for waiting reception of the message is searched as the information (3), the transmitting processor number and the message number are searched, in accordance with the message reception number of the like, as the information (2) of just before it (step 63).

The information transmitting the corresponding message number is searched among the information of the processor in question (step 64). These pieces of information are stored in the maximum delay path memory 44 (step 65).

Further, it is possible to obtain the maximum delay path in accordance with each piece of information memorized in the maximum delay path memory 44 by means of repeating the processing at steps 62∼ 65 regarding each processor from the last ending processor to starting processor where execution of the parallel processing is started.

For example, with the processors A, B and C, an example will be described for obtaining a delay path.
(1) The processor A starts the execution.
(2) The processor A is ready to receive a message from the processor B.
(3) The processor B transmits the message.
(4) The processor B starts the execution.
(5) The processor B is ready to receive a message from the processor C.
(6) The processor C transmits the message.
(7) The processor C starts the execution.
(8) The execution of the processor B is ended.

The path like above is found. Each piece of information includes the information regarding to the time instance (instant) so that the time interval between (2) and (3) and the time interval between (5) and (6) can be obtained. Thus, it is possible to know the message reception waiting time interval.

Therefore, the performance evaluation for the parallel computer can be achieved. In addition, the waiting time interval for the message can be obtained so that it is possible to grasp in which path the waiting time interval is long, resulting in recognition for increasing the message transmission speed of that path in order to increase the speed of parallel processing.

On the other hand, when the information (6) is searched, the barrier synchronous number is obtained in accordance with the information (6). The comparison unit 42 compares the time when the barrier synchronous signal are issued with each other. Then, the search unit 43 searches the processor which has lastly issued the barrier synchronous number (step 68). The information is stored in the maximum delay path memory 44 (step 69).

Further, the processing at steps 67∼ 69 for the processor is repeated regarding each processor from the last ending processor to starting processor where execution of the parallel processing is started, to obtain the maximum delay path in accordance with each piece of information memorized in the maximum delay path memory 44.

Therefore, performance evaluation for the parallel computer can be made. In addition, it is possible to obtain the waiting time interval for the barrier synchronous signal so that it is possible to grasp in which path the waiting time interval is long, resulting in recognition for increasing the barrier synchronous demand of that path.

### [Embodiment 2]

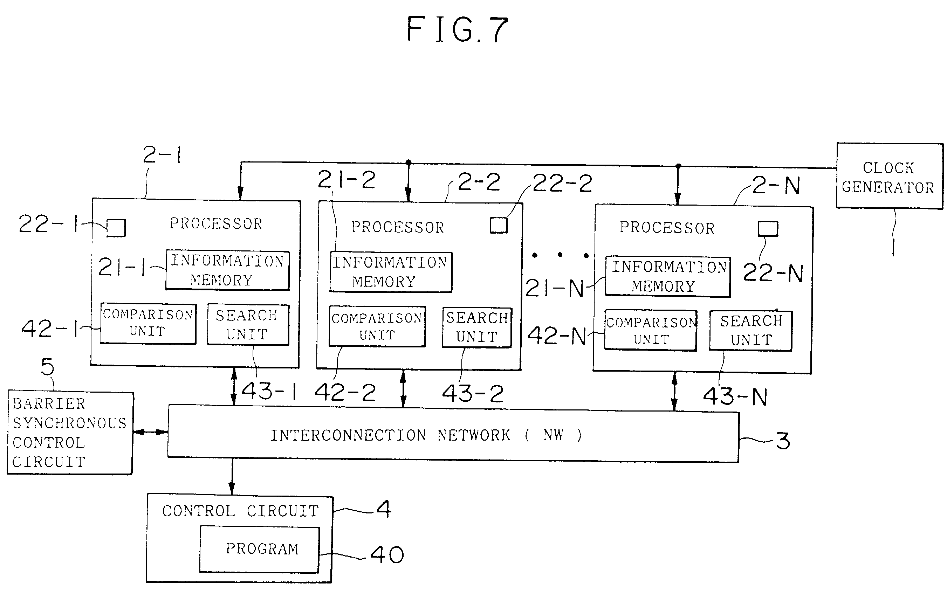

Next, the second embodiment will be described with reference to the drawing. Fig. 7 is a structural block diagram of a second embodiment of the performance evaluation device for the parallel computer.

The processors 2 (2-1∼ 2-N) are connected to a clock generator 1 and connected to an interconnection network ( a network NW ) 3 respectively. Each processor 2-1∼ 2-N has the information memories 21-1∼ 21-N, the comparison units 42-1∼ 42-N, the search units 43-1∼ 43-N, and the synchronous circuits 22-1∼ 22-N, respectively, and the control circuit 4 comprises the program 40. Other structure is the same as the above embodiment 1.

In accordance with such structure, in each processor 2-1∼ 2-N, the comparison units 42-1∼ 42-N carry out comparison processing in parallel for comparing each time or each barrier synchronous number. The search units 43-1∼ 43-3 carry out the above mentioned searching processing in parallel. Thus, the maximum delay path can be obtained.

That is, each information memory 21-1∼ 21-N of each processor 2-1∼ 2-N memorizes time information such as execution starting time for parallel processing and standby starting time for waiting reception of the message. Then, according to the control based on the program 40, the comparison unit 42-1 is activated to compare each execution ending time in the information memory 21-1 and 21-2. When the execution ending time in the information memory 21-1 is later than that of 21-2, the comparison unit 42-1 of the processor 2-1 having the information memory 21-1 is activated again to compare each execution ending time in the information memory 21-1 and next information memory 21-3. This processing is repeated until the latest execution ending time is detected. At last, the comparison unit 42-N in the processor 2-N having the information memory 21-N which is memorizing the latest execution ending time is activated. The processor 2-N including the comparison unit 42-N is regarded as a processor 2-N in which the execution has lastly been completed.

After this stage, the search unit 43-N in the processor 2, in which the execution has lastly been ended, searches the standby starting time for waiting reception of the message in this processor, the message number of this processor, the transmitting processor number, and the message transmitting processor corresponding to the transmitting processor number. Then the search unit 43-N in the transmitting processor 2, searches the standby starting time for waiting reception of the message in the processor and another information as well as the above search processing.

This search processing is repeated until it is conducted in a starting processor where execution of the parallel processing is started.

Consequently, the maximum delay path is obtained from the route of the search processing.

In addition, when the search unit 43 detects the last issued barrier synchronous signal, the search unit 43 can also regard the processor 2, where the barrier synchronous signal has been issued, as the processor having the maximum delay path.

As described above, in the second embodiment, the maximum delay path can be obtained by the processing in a processor. Therefore, it is not needed that the device has an external memory such as information collecting memory 41 of the first embodiment.

### [Embodiment 3]

Next, the third embodiment of the present invention will be described with reference to the drawings.

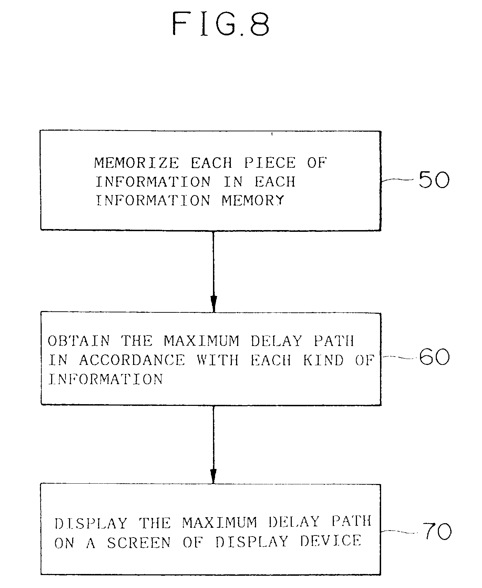

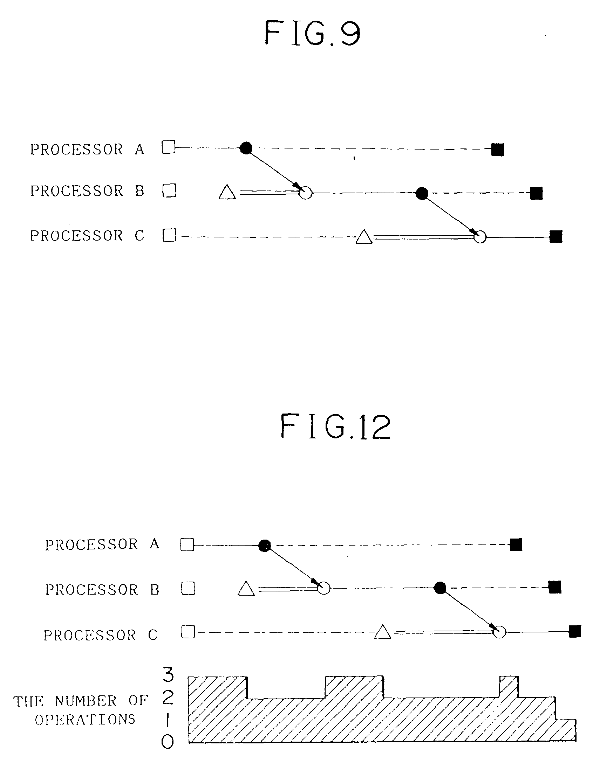

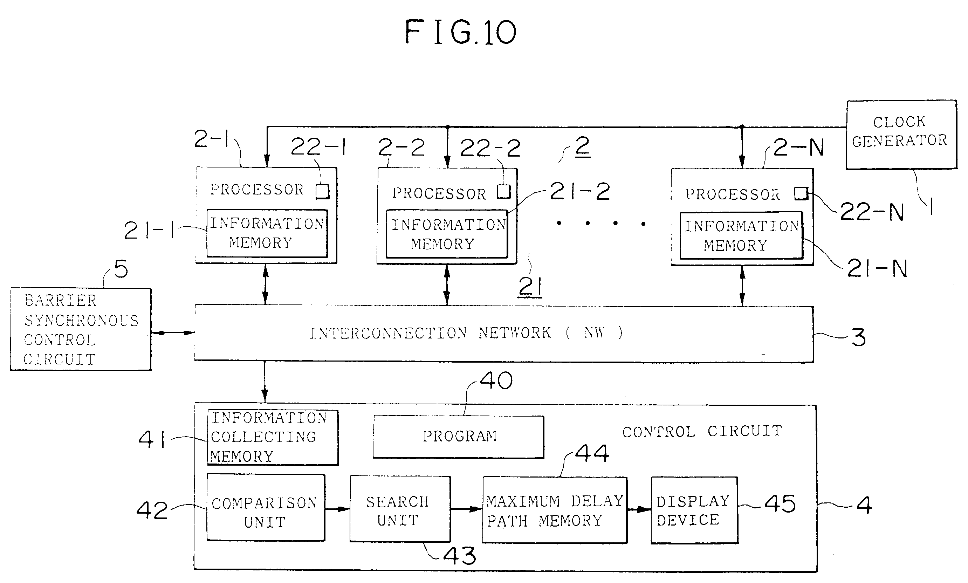

Fig. 10 is a structural block diagram of a third embodiment of the performance evaluation device for the parallel computer. Fig. 8 is a flow chart of the steps for displaying the maximum delay path in the third embodiment. Fig. 9 is a view for illustrating a example of a method for displaying the maximum delay path.

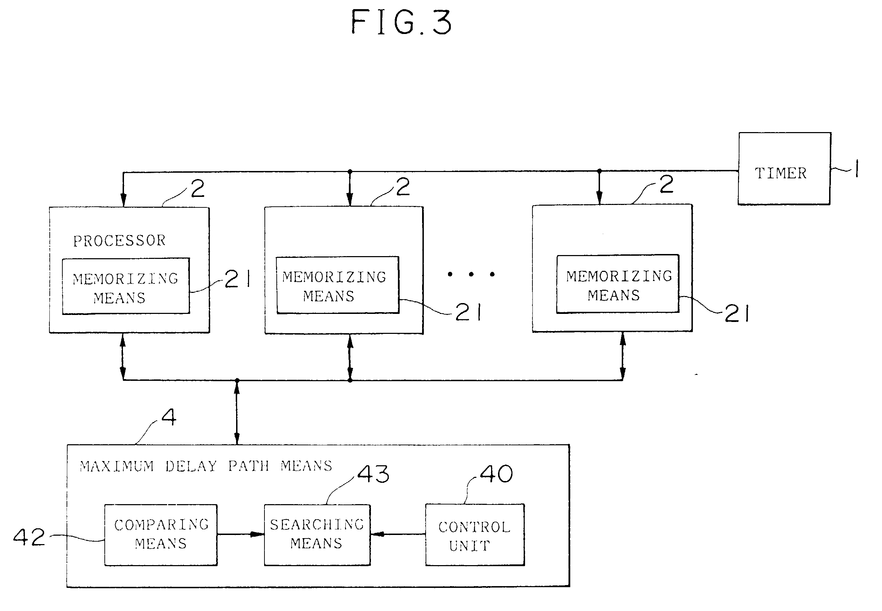

The third embodiment is characterized in that a display device 45 is further provided with the structure illustrated in Fig. 3 for displaying the maximum delay path memorized in the maximum delay path memory 44 on a screen. Thus, the embodiment has been described in conjunction with the display device 45 but a printer may be applied and any one of the display devices is applicable which enables visually displaying the maximum delay path.

In addition, the performance evaluation method for the parallel computer which displays the maximum delay path comprises, as illustrated in Fig. 8, the above mentioned memorizing step 50, the maximum delay path obtaining step 60 and step 70 for displaying the maximum delay path obtained at the maximum delay path obtaining step 60.

For example, a following example of the maximum delay path is shown.
(1) The processor A starts the execution.
(2) The processor A transmits a message to the processor B.
(3) The processor B is ready to receive the message from the processor A.
(4) The processor B receives the message from the processor A.
(5) The processor B transmits the message to the processor C.
(6) The processor C is ready to receive a message from the processor B.
(7) The processor C receives the message from the processor B.
(8) The execution of the processor C is ended.

The path like above is found. Each piece of information includes the information regarding to the time instance. The result of displaying them on the display device 45 is as illustrated in Fig. 9.

In Fig. 9, an abscissa and an ordinate on display represent the time and the type of the processor, respectively, to show the maximum delay path and the message flow of the path. In Fig. 9, a black square represents termination of the execution and a black circle represents transmission of the message or a barrier synchronous demand. A white circle represents reception of the message or an establishment of the barrier synchronism, a triangle represents a reception wait for the message or the barrier synchronous demand. A white square represents start of the execution. A double line represents a reception waiting state for the message and a real line represents the maximum delay path. A dotted line represents execution of one besides the maximum delay path and an arrow represent the message flow of the maximum delay path.

As mentioned above, the maximum delay path is displayed on the display device 45 so that it is visually shown which processor is waiting a message from which processor. In addition, the display device 45 also displays the waiting state for the message on displaying the maximum delay path so that it is possible to grasp the message waiting time interval causing the deterioration of the performance.

Therefore, it is possible to visually grasp in which processor the message waiting is long. For example, in the case illustrated in Fig. 9, the processor C has been waiting for the message from the processor B for a long time and it can be understood that the message transmission speed from the processor B should be increased.

### [Embodiment 4]

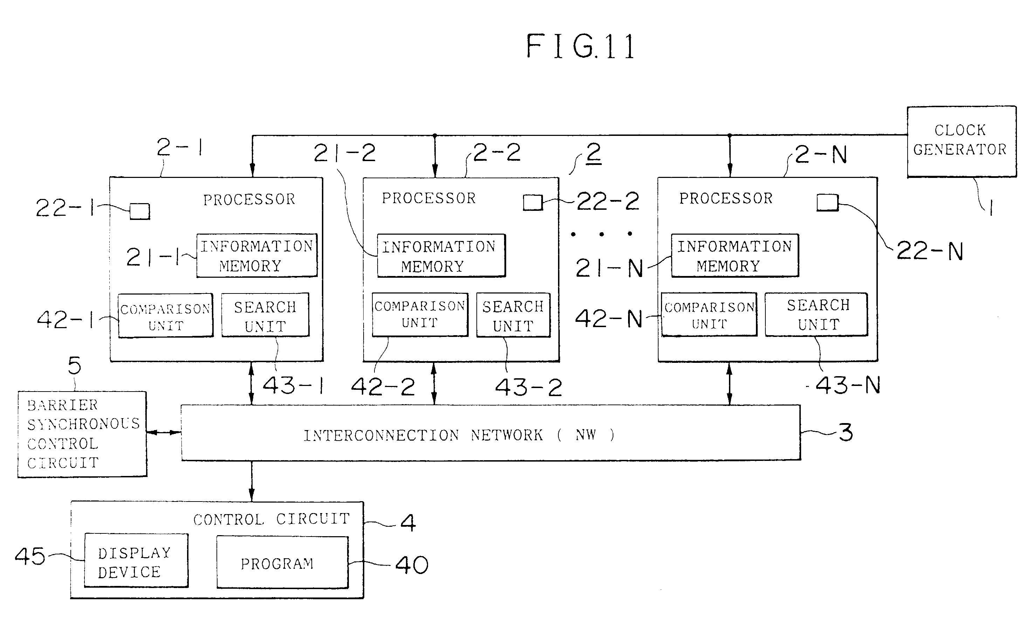

Next, the fourth embodiment of the present invention will be described with reference to Fig. 11.

Fig. 11 is a structural block diagram of a fourth embodiment of the performance evaluating device for the parallel computer.

The fourth embodiment is characterized in that the display device 45 is added to the above mentioned second embodiment to display the maximum delay path on a screen of the display device 45.

Such a fourth embodiment exhibits the effect of the second embodiment and the effect of the third embodiment.

### [Embodiment 5]

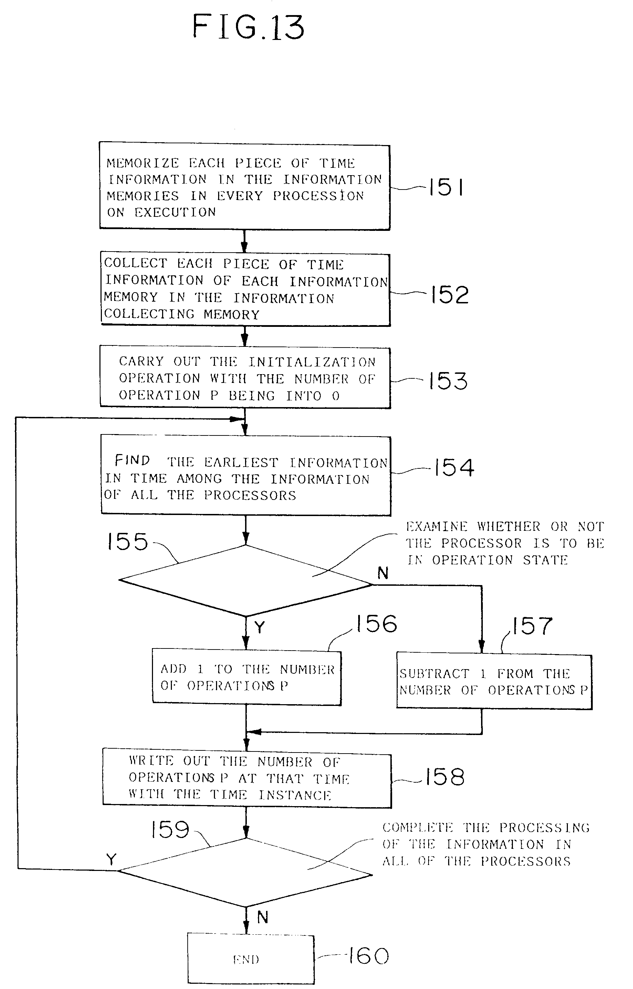

Fig. 12 is a view for illustrating a second example of a method for displaying the maximum delay path in the above embodiment 3.

In Fig. 12, the display device 45 also displays the number of each processor being in operation on displaying the maximum delay processor on the screen.

A method for obtaining the number of each processor 2 being in operation is as follows. On execution, each processor 2 memorizes, the message transmission starting time and the transmission ending time, the message reception starting time and the reception ending time instance, an interruption processing starting time and process ending time, a time for a task switch, and the processing starting time and the processing ending time (step 151). The operating state is understood from the processing starting time to the processing ending time. Each time information memorized is collected to a separate memory (step 152).

Next, the initialization operation is carried out with the number of operations being made zero (step 153). The earliest information in time is searched out among the information of all of the processors 2-1∼ 2-N (step 154). Then, whether or not the processor is to be in operation state is examined (step 154).

If it is not in the operation state, the number of operation is decreased by one (step 157). If in the operation state, the number of operation is increased by one (step 156). The number of operation at that time is written out with the time instance (step 158).

Next, it judges whether or not the processing of the information in all of the processors has been completed (step 159). If completed, it is returned to the step 154 and the above mentioned process is repeated.

By means of processing in a manner described above, the change of the number of operations in time sequence as illustrated in Fig. 12 can be obtained to allow to recognize at which time the operational rate is reduced. Thus, a cause of deterioration of performance in the parallel computer can further be recognized compared with a display illustrated in Fig. 9.

### [Embodiment 6]

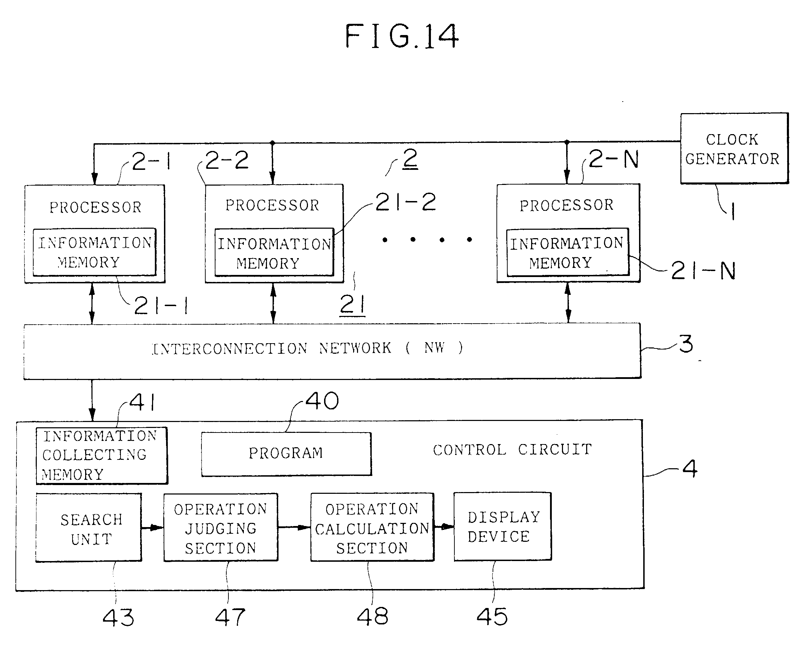

Fig. 14 is a structural block diagram of the fifth embodiment for a performance evaluation device according to the third embodiment (Fig. 8 method) for use in realizing a performance evaluation method for a parallel computer. The clock generator 1 memorizes in each processors 2-1 ∼ 2-N, the message transmission starting time and the transmission ending time, the message reception starting time and the reception ending time instance, an interruption processing starting time and process ending time, a time for a task switch, and the processing starting time and the processing ending time.

Each information memory 21-1∼ 21-N memorizes the following information when the parallel computer was executed.
- Information (11):: memorizes the message transmission starting time,
- Information (12):: memorizes the transmission ending time,
- Information (13):: memorizes the message reception starting time,
- Information (14):: memorizes the reception ending time instance,
- Information (15):: memorizes an interruption processing starting time,
- Information (16):: memorizes an interruption processing ending time,
- Information (17):: memorizes a time for a task switch,
- Information (18):: memorizes the processing starting time,
- Information (19):: memorizes the processing ending time.

Each information is as follows. There are informations (11)-(17) and task numbers are the numbers given now on executed. The judgements whether or not the processor is operated in application tasks are conducted as follows.

The message transmission time is the time from Information 11 to Information 12. The message reception time is the time from Information 13 to Information 14. The interruption time is the time from Information 15 to Information 16. Tasks except applications such as in nil task, nil task is executed in the time. Information 18 and 19 which exemplify the above times are the operation state. The operation numbers P of processors 2 can be obtained by using this information. The numbers of processors are N.

The information collecting memory 41 memorizes each time collected from the information memories 21-1∼ 21-N in each processor 2-1∼ 2-N through the interconnection network 3.

A control circuit 4 is constructed as follows.

A search unit 43 searches the lastly ended time information among the time informations and outputs a result to an operation judging section 47.

The operation judging section 47 determines whether or not each processor 2 is in operation state based on each time information searched by the search unit 43 and outputs the results to an operation calculation section 48.

The operation calculation section 48 obtains the operation numbers of the processors at random time by the judgement of the operation judging section 47 and outputs to a display device 45.

A display device 45 outputs time changes from the operation calculation section 48 to each processor 2 and records changes of the operation in time sequence in the axis of abscissa and the numbers of the operation in the axis of the spindle as shown in Fig. 12.

A program 40 is an instruction for carrying out a flow illustrated in Fig. 13. The instruction is supplied to the information collecting memory 41.

The device is operated in accordance with the steps shown in Fig. 13, it is possible to obtain the changes of the operation in time sequence as shown in Fig. 12 and to recognize when the operation rate is reduced. Therefore, a cause of deterioration of performance in the parallel computer can further be recognized so that problems of the program can be seen in advance.

### [Embodiment 7]

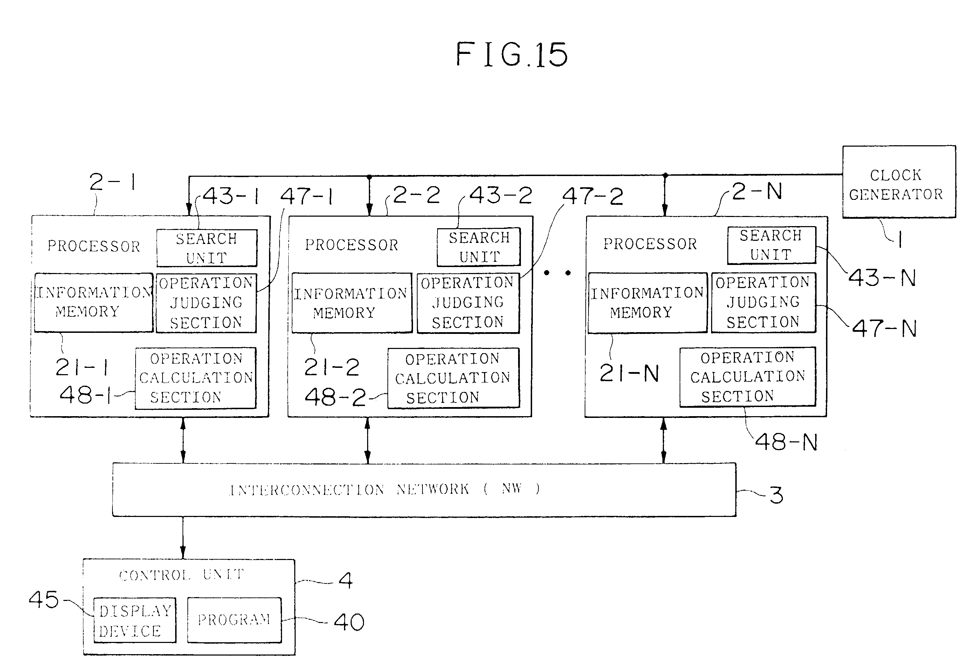

Fig. 15 is a structural block diagram of the sixth embodiment for a performance evaluation device according to the third embodiment (Fig. 8 method) for use in realizing a performance evaluation method for a parallel computer. The sixth embodiment will be explained with reference to the drawings. The device of sixth embodiment includes information memories 21-1∼ 21-N, search units 42-1∼ 42-N, operation judging section 43-1∼ 43-N and the operation number calculation section 44-1∼ 44-N in each processor 2-1∼ 2-N. A control circuit 4 includes a program 40 and a display device 45.

In this construction, the processing is conducted in parallel in each processor 2-1∼ 2-N and the numbers of the operation can be obtained. According to the present invention, it is possible to obtain the maximum delay path on message communication or on barrier synchronous issue, thereby to evaluate the performance of a parallel computer. In addition, it is possible to obtain the waiting time for the message and the waiting time due to the barrier synchronism, thereby to grasp in which path the waiting time is long.

Further, the maximum delay path may be visually shown. By means of displaying the message waiting state and the number of operated processor on displaying the maximum delay path, the performance evaluation of the parallel computer can be improved.

## Claims

1. A performance evaluation method for a parallel computer for carrying out parallel processing in each processor by means of transmitting or receiving a message among a plurality of processors, comprising;
a memorizing step for memorizing various pieces of information in each processor in said parallel processing and a maximum delay path obtaining step (60) for obtaining, after execution of said parallel processing is completed, a maximum delay path by searching for a last ending processor in which the execution has lastly been completed and tracing a message transmitting route from the last ending processor to a starting processor from where the message has arisen;
said memorizing step including in each processor;
(1) a step for memorizing execution starting time of the parallel processing,
(2) a step for memorizing a standby starting time for reception of the message,
(3) a step for memorizing a message number on reception of said message, transmitting processor number and the time thereat,
(4) a step for memorizing a message number on transmitting the message, and the time thereat, and
(5) a step for memorizing execution ending time;
said maximum delay path obtaining step including;
(a) a step for searching for the last ending processor in which the execution has lastly been completed in accordance with each time obtained in said step for memorizing execution ending time in each processor,
(b) a step for searching for the standby starting time for reception of the message in the processor,
(c) a step for searching for the message number and the transmitting processor number obtained in the processor, and
(d) a step for searching for a message transmitting processor corresponding to the transmitting processor number in the processor;
said steps (b) through (d) being repeated regarding each processor from the last ending processor to a starting processor where execution of the parallel processing is started, to obtain said maximum delay path.

2. A performance evaluation method for a parallel computer according to Claim 1, wherein said maximum delay path obtaining step obtains a waiting time interval for a message in accordance with the time obtained in said step (b) and the time obtained in said step (c).

3. A performance evaluation method for a parallel computer according to Claim 1, wherein in a case where processing carried out by the processors is interrupted until said all of the processors issue a barrier synchronous signal with a synchronous number on execution of said parallel processing, said memorizing step further including a step (56) for memorizing a barrier synchronous number of said barrier synchronous signal and the time thereat and
said maximum delay path obtaining step further including a step (e) for searching for the barrier synchronous number and the time thereat obtained in said step (56) and searching for a processor which has lastly issued the barrier synchronous number in accordance with the barrier synchronous number and the time instance thereat to obtain said maximum delay path.

4. A performance evaluation method for a parallel computer according to Claim 3, wherein said maximum delay path obtaining step obtains a waiting time interval due to the barrier synchronous control in accordance with the time obtained in said step (e).

5. A performance evaluation method for a parallel computer according to any one of claims 1 to 4, wherein said maximum delay path obtaining step further including a step (f) for displaying said obtained maximum delay path.

6. A performance evaluation method for a parallel computer according to Claim 5, wherein said maximum delay path and message flow of the path are displayed with one axis on a display representing the time and the other axis thereon representing processors for displaying said maximum delay path.

7. A performance evaluation method for a parallel computer according to claim 5 or 6, wherein a waiting state for said message is also displayed in said step (f) on displaying said maximum delay path.

8. A performance evaluation method for a parallel computer according to claim 5, 6, or 7 wherein the number of said each processor being in operation is also displayed in said step (f) on displaying said maximum delay path.

9. A performance evaluation device for a parallel computer which carries out parallel processing in each processor by means of transmitting or receiving a message among a plurality of processors, comprising;
measuring means for measuring an execution starting time, an standby starting time for waiting for reception of the message, a receiving time, a transmitting time, and an execution ending time for each processor,
memorizing means for memorizing a message number on reception of the message, a transmitting processor number, a message number on transmitting the message and each time measured by the measuring means,
comparing means for comparing each execution ending time of processors which is memorized by the memorizing means,
searching means for searching for the processor in which the execution has lastly been ended, in accordance with the output of the comparing means and also searching for the standby starting time for waiting reception of the message in the processor, the message number of the message in the processor, the transmitting processor number and the message transmitting processor corresponding to the transmitting processor number and maximum delay path obtaining means for obtaining a maximum delay path showing the longest route of the message transmission by repeatedly carrying out the search processing of the searching means regarding each processor from the last ending processor to a starting processor where execution of the parallel processing is started.

10. A performance evaluation device for a parallel computer according to Claim 9, wherein said each processor further comprising said memorizing means, said comparing means and said searching means,
comparison processing carried by said comparing means is carried out in parallel to search processing by said searching means in each processor.

11. A performance evaluation device for a parallel computer according to claim 9 or 10, wherein said device further comprises:-
barrier synchronous control means for making processing carried by the processor be interrupted until said all of the processors issue a barrier synchronous signal with a synchronous number on execution of said parallel processing;
said memorizing means memorizes a barrier synchronous number of said barrier synchronous signal and the time thereat;
said comparing means compares said barrier synchronous numbers and the time thereat with each other; and
said searching means obtains said maximum delay path by searching for the processor which has lastly issued the barrier synchronous number in accordance with the barrier synchronous number and the time thereat.

12. A performance evaluation device for a parallel computer according to claim 9, 10, or 11, wherein said maximum delay path obtaining means further comprises displaying means for displaying said maximum delay path.

13. A performance evaluation device for a parallel computer according to claim 12, wherein said displaying means displays maximum delay path and message flow of the path, with one axis on a display representing the time and the other axis thereon representing processors for displaying said maximum delay path.

14. A performance evaluation device for a parallel computer according to claim 12 or 13, wherein said displaying means also displays a waiting state for said message on displaying said maximum delay path.

15. A performance evaluation device for a parallel computer according to claim 12, 13 or 14, wherein said displaying means also displays the number of said each processor being in operation.

## Patentansprüche

1. Ein Leistungsbewertungsverfahren für einen Parallelcomputer zum Ausführen der Parallelverarbeitung in jedem Prozessor durch das Senden oder Empfangen einer Meldung zwischen einer Vielzahl von Prozessoren, mit:
einem Speicherschritt zum Speichern von verschiedenen Informationen in jedem Prozessor bei der genannten Parallelverarbeitung und einem Schritt (60) zum Erhalten des maximalen Verzögerungspfades, zum Erhalten, nachdem die Ausführung der genannten Parallelverarbeitung vollendet ist, eines maximalen Verzögerungspfades durch Suchen eines zuletzt endenden Prozessors, in dem die Ausführung zuletzt vollendet worden ist, und Verfolgen eines Meldungsübertragungsweges von dem zuletzt endenden Prozessor bis zu einem beginnenden Prozessor, von dem die Meldung ausgegangen ist;
welcher Speicherschritt in jedem Prozessor enthält:
(1) einen Schritt zum Speichern der Ausführungsstartzeit der Parallelverarbeitung,
(2) einen Schritt zum Speichern einer Bereitschaftsstartzeit für den Empfang der Meldung,
(3) einen Schritt zum Speichern einer Meldungsnummer bei Empfang der genannten Meldung, der Nummer des sendenden Prozessors und der Zeit dazu,
(4) einen Schritt zum Speichern einer Meldungsnummer beim Senden der Meldung und der Zeit dazu, und
(5) einen Schritt zum Speichern der Ausführungsendzeit;
welcher Schritt zum Erhalten des maximalen Verzögerungspfades enthält:
(a) einen Schritt zum Suchen des zuletzt endenden Prozessors, in dem die Ausführung zuletzt vollendet worden ist, gemäß jeder Zeit, die bei dem genannten Schritt zum Speichern der Ausführungsendzeit in jedem Prozessor erhalten wurde,
(b) einen Schritt zum Suchen der Bereitschaftsstartzeit für den Empfang der Meldung in dem Prozessor,
(c) einen Schritt zum Suchen der Meldungsnummer und der Nummer des sendenden Prozessors, die in dem Prozessor erhalten wird, und
(d) einen Schritt zum Suchen eines meldungssendenden Prozessors, der der Nummer des sendenden Prozessors in dem Prozessor entspricht;
welche Schritte (b) bis (d) bezüglich jedes Prozessors ab dem zuletzt endenden Prozessor bis zu einem beginnenden Prozessor, bei dem die Ausführung der Parallelverarbeitung gestartet wurde, wiederholt werden, um den genannten maximalen Verzögerungspfad zu erhalten.

2. Ein Leistungsbewertungsverfahren für einen Parallelcomputer nach Anspruch 1, bei dem der genannte Schritt zum Erhalten des maximalen Verzögerungspfades ein Wartezeitintervall für eine Meldung gemäß der Zeit erhält, die bei dem genannten Schritt (b) erhalten wurde, und der Zeit, die bei dem genannten Schritt (c) erhalten wurde.

3. Ein Leistungsbewertungsverfahren für einen Parallelcomputer nach Anspruch 1, bei dem in einem Fall, wenn die Verarbeitung, die durch die Prozessoren ausgeführt wird, unterbrochen wird, bis alle genannten Prozessoren bei der Ausführung der genannten Parallelverarbeitung ein Synchronsperrsignal mit einer Synchronnummer ausgeben, der genannte Speicherschritt ferner einen Schritt (56) enthält, zum Speichern einer Synchronsperrnummer des genannten Synchronsperrsignals und der Zeit dazu, und
der genannte Schritt zum Erhalten des maximalen Verzögerungspfades ferner einen Schritt (e) enthält, zum Suchen der Synchronsperrnummer und der Zeit dazu, die bei dem genannten Schritt (56) erhalten wurden, und zum Suchen eines Prozessors, der die Synchronsperrnummer zuletzt ausgegeben hat, gemäß der Synchronsperrnummer und dem Zeitpunkt dazu, um den genannten maximalen Verzögerungspfad zu erhalten.

4. Ein Leistungsbewertungsverfahren für einen Parallelcomputer nach Anspruch 3, bei dem der genannte Schritt zum Erhalten des maximalen Verzögerungspfades ein Wartezeitintervall auf Grund der Synchronsperrsteuerung gemäß der Zeit erhält, die bei dem genannten Schritt (e) erhalten wurde.

5. Ein Leistungsbewertungsverfahren für einen Parallelcomputer nach irgendeinem der Ansprüche 1 bis 4, bei dem der genannte Schritt zum Erhalten des maximalen Verzögerungspfades ferner einen Schritt (f) enthält, zum Anzeigen des genannten erhaltenen maximalen Verzögerungspfades.

6. Ein Leistungsbewertungsverfahren für einen Parallelcomputer nach Anspruch 5, bei dem der genannte maximale Verzögerungspfad und der Meldungsfluß des Pfades angezeigt werden, wobei zum Anzeigen des genannten maximalen Verzögerungspfades eine Achse auf einem Display die Zeit darstellt und die andere Achse auf ihm Prozessoren darstellt.

7. Ein Leistungsbewertungsverfahren für einen Parallelcomputer nach Anspruch 5 oder 6, bei dem auch ein Wartezustand für die genannte Meldung bei dem genannten Schritt (f) beim Anzeigen des genannten maximalen Verzögerungspfades angezeigt wird.

8. Ein Leistungsbewertungsverfahren für einen Parallelcomputer nach Anspruch 5, 6 oder 7, bei dem auch die Nummer von jedem in Betrieb befindlichen Prozessor bei dem genannten Schritt (f) beim Anzeigen des genannten maximalen Verzögerungspfades angezeigt wird.

9. Eine Leistungsbewertungsvorrichtung für einen Parallelcomputer, der eine Parallelverarbeitung in jedem Prozessor durch das Senden oder Empfangen einer Meldung zwischen einer Vielzahl von Prozessoren ausführt, mit:
einem Meßmittel zum Messen einer Ausführungsstartzeit, einer Bereitschaftsstartzeit zum Warten auf den Empfang der Meldung, einer Empfangszeit, einer Sendezeit und einer Ausführungsendzeit für jeden Prozessor,
einem Speichermittel zum Speichern einer Meldungsnummer bei Empfang der Meldung, einer Nummer des sendenden Prozessors, einer Meldungsnummer beim Senden der Meldung und jeder Zeit, die durch das Meßmittel gemessen wurde,
einem Vergleichsmittel zum Vergleichen von jeder Ausführungsendzeit von Prozessoren, die durch das Speichermittel gespeichert wurde,
einem Suchmittel zum Suchen des Prozessors, in dem die Ausführung zuletzt beendet worden ist, gemäß der Ausgabe des Vergleichsmittels, und auch zum Suchen der Bereitschaftsstartzeit zum Warten auf den Empfang der Meldung in dem Prozessor, der Meldungsnummer der Meldung in dem Prozessor, der Nummer des sendenden Prozessors und des meldungssendenden Prozessors, der der Nummer des sendenden Prozessors entspricht, und einem Mittel zum Erhalten des maximalen Verzögerungspfades, zum Erhalten eines maximalen Verzögerungspfades, der den längsten Weg der Meldungsübertragung aufweist, durch wiederholtes Ausführen der Suchverarbeitung des Suchmittels bezüglich jedes Prozessors von dem zuletzt endenden Prozessor bis zu einem beginnenden Prozessor, bei dem die Ausführung der Parallelverarbeitung gestartet wurde.

10. Eine Leistungsbewertungsvorrichtung für einen Parallelcomputer nach Anspruch 9, bei der jeder Prozessor ferner das genannte Speichermittel, das genannte Vergleichsmittel und das genannte Suchmittel umfaßt,
die Vergleichsverarbeitung, die durch das genannte Vergleichsmittel ausgeführt wird, in jedem Prozessor parallel zu der Suchverarbeitung durch das genannte Suchmittel ausgeführt wird.

11. Eine Leistungsbewertungsvorrichtung für einen Parallelcomputer nach Anspruch 9 oder 10, bei der die genannte Vorrichtung ferner umfaßt:-
ein Synchronsperrsteuermittel zum Bewirken, daß die Verarbeitung, die durch den Prozessor ausgeführt wird, unterbrochen wird, bis alle genannten Prozessoren bei der Ausführung der genannten Parallelverarbeitung ein Synchronsperrsignal mit einer Synchronnummer ausgeben;
das genannte Speichermittel eine Synchronsperrnummer des genannten Synchronsperrsignals und die Zeit dazu speichert;
das genannte Vergleichsmittel die genannten Synchronsperrnummern und die Zeit dazu miteinander vergleicht; und
das genannte Suchmittel den genannten maximalen Verzögerungspfad durch Suchen des Prozessors, der die Synchronsperrnummer zuletzt ausgegeben hat, gemäß der Synchronsperrnummer und der Zeit dazu erhält.

12. Eine Leistungsbewertungsvorrichtung für einen Parallelcomputer nach Anspruch 9, 10 oder 11, bei der das genannte Mittel zum Erhalten des maximalen Verzögerungspfades ferner ein Anzeigemittel zum Anzeigen des genannten maximalen Verzögerungspfades umfaßt.

13. Eine Leistungsbewertungsvorrichtung für einen Parallelcomputer nach Anspruch 12, bei der das genannte Anzeigemittel den maximalen Verzögerungspfad und den Meldungsfluß des Pfades anzeigt, wobei zum Anzeigen des genannten maximalen Verzögerungspfades eine Achse auf einem Display die Zeit darstellt und die andere Achse auf ihm Prozessoren darstellt.

14. Eine Leistungsbewertungsvorrichtung für einen Parallelcomputer nach Anspruch 12 oder 13, bei der das genannte Anzeigemittel beim Anzeigen des genannten maximalen Verzögerungspfades auch einen Wartezustand für die genannte Meldung anzeigt.

15. Eine Leistungsbewertungsvorrichtung für einen Parallelcomputer nach Anspruch 12, 13 oder 14, bei der das genannte Anzeigemittel auch die Nummer von jedem in Betrieb befindlichen Prozessor anzeigt.

## Revendications

1. Procédé d'évaluation de performances pour un ordinateur parallèle destiné à mettre en oeuvre un traitement parallèle dans chaque dispositif de traitement, ou processeur, par émission ou réception d'un message entre une pluralité de processeurs, comprenant :
une opération de mémorisation servant à mémoriser divers éléments d'information dans chaque processeur lors dudit traitement parallèle et une opération (60) d'obtention de trajet de retard maximal permettant d'obtenir, une fois finie l'exécution dudit traitement parallèle, un trajet de retard maximal en recherchant le processeur ayant fini en dernier, dans lequel l'exécution a pris fin en dernier, et en suivant le chemin de transmission du message, depuis le processeur qui a fini en dernier jusqu'au processeur qui a débuté, d'où le message provient ;
ladite opération de mémorisation comportant, dans chaque processeur:
(1) une opération de mémorisation de l'heure de début d'exécution du traitement parallèle,
(2) une opération de mémorisation d'une heure de début d'attente pour la réception du message,
(3) une opération de mémorisation d'un numéro de message à la réception dudit message, d'un numéro de processeur d'émission et de l'heure correspondante,
(4)une opération de mémorisation d'un numéro de message à l'émission du message, et de l'heure correspondante, et
(5) une opération de mémorisation de l'heure de fin d'exécution ;
ladite opération d'obtention de trajet de retard maximal comportant :
(a) une opération de recherche du processeur ayant fini en dernier, dans lequel l'exécution a pris fin en dernier, en fonction de chaque heure obtenue à ladite opération de mémorisation de l'heure de fin d'exécution dans chaque processeur,
(b) une opération de recherche de l'heure de début d'attente pour la réception du message dans le processeur,
(c) une opération de recherche du numéro de message et du numéro de processeur d'émission obtenus dans le processeur, et
(d) une opération de recherche d'un processeur d'émission de message correspondant au numéro de processeur d'émission se trouvant dans le processeur ;
les opérations (b) à (d) étant répétées relativement à chaque processeur, depuis le processeur ayant fini en dernier jusqu'au processeur ayant débuté, où l'exécution du traitement parallèle a commencé, en vue de l'obtention dudit trajet de retard maximal.

2. Procédé d'évaluation de performances pour un ordinateur parallèle selon la revendication 1, où ladite opération d'obtention de trajet de retard maximal obtient un intervalle de temps d'attente pour un message en fonction de l'heure obtenue à ladite opération (b) et de l'heure obtenue à ladite opération (c).

3. Procédé d'évaluation de performances pour un ordinateur parallèle selon la revendication 1, où, dans le cas où le traitement effectué par les processeurs est interrompu jusqu'à ce que tous lesdits processeurs délivrent un signal synchrone de barrière avec un numéro synchrone à l'exécution dudit traitement parallèle, ladite opération de mémorisation comporte en outre une opération (56) de mémorisation d'un numéro synchrone de barrière dudit signal synchrone de barrière et de l'heure correspondante, et
ladite opération d'obtention de trajet de retard maximal comportant en outre une opération (e) de recherche du numéro synchrone de barrière et de l'heure correspondante obtenus lors de l'opération (56) et de recherche du processeur qui a délivré en dernier le numéro synchrone de barrière en fonction du numéro synchrone de barrière et de l'heure correspondante afin d'obtenir ledit trajet de retard maximal.

4. Procédé d'évaluation de performances pour un ordinateur parallèle selon la revendication 3, où ladite opération d'obtention de trajet de retard maximal obtient un intervalle de temps d'attente dû à la commande synchrone de barrière en fonction de l'heure obtenue lors de l'opération (e).

5. Procédé d'évaluation de performances pour un ordinateur parallèle selon l'une quelconque des revendications 1 à 4, où ladite opération d'obtention de trajet de retard maximal comporte en outre une opération (f) d'affichage dudit trajet de retard maximal obtenu.

6. Procédé d'évaluation de performances pour un ordinateur parallèle selon la revendication 5, où ledit trajet de retard maximal et la circulation de messages du trajet sont affichés, un axe de l'affichage représentant le temps et l'autre axe représentant des processeurs afin d'afficher ledit trajet de retard maximal.

7. Procédé d'évaluation de performances pour un ordinateur parallèle selon la revendication 5 ou 6, où un état d'attente pour ledit message est également affiché pendant ladite opération (f) lors de l'affichage dudit trajet de retard maximal.

8. Procédé d'évaluation de performances pour un ordinateur parallèle selon la revendication 5, 6 ou 7, où le numéro de chaque dit processeur qui est en fonctionnement est également affiché au cours de ladite opération (f) lors de l'affichage dudit trajet de retard maximal.

9. Dispositif d'évaluation de performances pour un ordinateur parallèle qui effectue un traitement en parallèle dans chaque processeur par émission ou réception d'un message entre une pluralité de processeurs, comprenant :
un moyen de mesure qui sert à mesurer une heure de début d'exécution, une heure de début d'attente pour l'attente de la réception du message, une heure de réception, une heure d'émission et une heure de fin d'exécution pour chaque processeur,
un moyen de mémorisation servant à mémoriser un numéro de message à la réception du message, un numéro de processeur d'émission, un numéro de message à l'émission du message et chaque heure mesurée par le moyen de mesure,
un moyen de comparaison servant à comparer chaque heure de fin d'exécution de processeurs qui est mémorisée par le moyen de mémorisation,
un moyen de recherche servant à chercher le processeur dans lequel l'exécution a pris fin en dernier, en fonction du signal de sortie du moyen de comparaison et aussi à chercher le temps de début d'attente pour l'attente de réception du message dans le processeur, le numéro de message du message dans le processeur, le numéro du processeur d'émission et le processeur émettant le message correspondant au numéro du processeur d'émission, et
un moyen d'obtention de trajet de retard maximal servant à obtenir un trajet de retard maximal qui montre le cheminement le plus long de la transmission du message en effectuant de manière répétée le traitement de recherche du moyen de recherche relativement à chaque processeur, depuis le processeur qui a fini en dernier jusqu'au processeur qui a débuté, où l'exécution du traitement parallèle a commencé.

10. Dispositif d'évaluation de performances pour un ordinateur parallèle selon la revendication 9, où chaque dit processeur comprend en outre ledit moyen de mémorisation, ledit moyen de comparaison et ledit moyen de recherche,
le traitement de comparaison effectué par ledit moyen de comparaison est effectué en parallèle au traitement de recherche effectué par ledit moyen de recherche dans chaque processeur.

11. Dispositif d'évaluation de performances pour un ordinateur parallèle selon la revendication 9 ou 10, où ledit dispositif comprend en outre :
un moyen de commande synchrone de barrière qui fait que le traitement effectué par le processeur est interrompu jusqu'à ce que tous lesdits processeurs délivrent un signal synchrone de barrière avec un numéro synchrone lors de l'exécution dudit traitement parallèle ;
ledit moyen de mémorisation mémorise un numéro synchrone de barrière dudit signal synchrone de barrière et l'heure correspondante ;
ledit moyen de comparaison compare entre eux lesdits numéros synchrones de barrière et l'heure correspondante ; et
ledit moyen de recherche obtient ledit trajet de retard maximal en cherchant le processeur qui a délivré en dernier le numéro synchrone de barrière en fonction du numéro synchrone de barrière et de l'heure correspondante.

12. Dispositif d'évaluation de performances pour un ordinateur parallèle selon la revendication 9, 10 ou 11, où ledit moyen d'obtention de trajet de retard maximal comprend en outre un moyen d'affichage servant à afficher ledit trajet de retard maximal.

13. Dispositif d'évaluation de performances pour un ordinateur parallèle selon la revendication 12, où ledit moyen d'affichage affiche le trajet de retard maximal et la circulation de messages du trajet, un axe de l'affichage représentant l'heure et l'autre axe représentant des processeurs afin d'afficher ledit trajet de retard maximal.

14. Dispositif d'évaluation de performances pour un ordinateur parallèle selon la revendication 12 ou 13, où ledit moyen d'affichage affiche également un temps d'attente pour ledit message lors de l'affichage dudit trajet de retard maximal.

15. Dispositif d'évaluation de performances pour un ordinateur parallèle selon la revendication 12, 13 ou 14, où ledit moyen d'affichage affiche également le numéro de chaque dit processeur qui est en fonctionnement.
